# EUROPÄISCHE PATENTSCHRIFT

(11) **EP 0 474 890 B1**
(45) Veröffentlichungstag und Bekanntmachung des Hinweises auf die Patenterteilung: **16.02.1994**
(21) Anmeldenummer: 90116810.4
(22) Anmeldetag: 01.09.1990
(51) Int. Cl.: C02F 11/10, C10B 53/00, F23G 5/027

(54) **Verfahren und Einrichtung zur Behandlung von Klärschlamm**
Process and apparatus for sewage sludge treatment
Procédé et dispositif pour le traitement de boues d'épuration

(43) Veröffentlichungstag der Anmeldung: 18.03.1992
(73) Patentinhaber: Aicher, Max, Dipl.-Ing., D-83395 Freilassing (DE)
(72) Erfinder: Aicher, Max, Dipl.-Ing., D-83395 Freilassing (DE)
(74) Vertreter: Patentanwälte Möll und Bitterich

(56) Entgegenhaltungen:
- EP-A- 0 038 420
- EP-A- 0 312 742
- EP-A- 0 347 808
- DE-A- 2 651 302
- DE-A- 3 733 078
- DE-B- 2 855 510

## Beschreibung

Die Erfindung betrifft ein Verfahren zur Behandlung von Klärschlamm, bei dem der Klärschlamm in aufeinanderfolgenden Behandlungsstufen zunächst getrocknet, danach einer Konvertierung unter anaeroben Bedingungen bei ca. 250 bis 350 Grad C unterzogen und schließlich bei mindestens 1.250 Grad C gebrannt wird, sowie eine Einrichtung zum Durchführen dieses Verfahrens.

Klärschlamm ist ein nicht vermeidbares Produkt der biologischen Abwasserreinigung; seine Beseitigung ist mit zunehmender Problematik behaftet. Klärschlamm enthält je nach Behandlung und Zusammensetzung des Abwassers neben dem hauptsächlich aus Biomasse bakteriellen Ursprungs bestehenden organischen Anteil zwischen 20 bis 60 %, im Mittel etwa 50 % anorganische Bestandteile. Im Gegensatz zu pflanzlicher Biomasse kommen in Klärschlamm kaum Lipine und nur geringe Mengen Kohlehydrate, dafür aber als Hauptkomponenten Lipide und Proteine vor.

Die in der Bundesrepublik Deutschland jährlich anfallende Menge an flüssigem Klärschlamm aus Haushalten und Industrie erhöht sich laufend; sie betrug z.B. im Jahr 1986 etwa 50 Millionen cbm mit etwa 4,6 % Gehalt an Trockenmasse. Von dieser Gesamtmenge kann nur etwa ein Drittel genutzt, d.h. entweder unmittelbar oder nach Kompostierung auf Landwirtschaftlich genutzte Flächen aufgebracht werden; der größte Teil des Klärschlammaufkommens wird als Abfall behandelt, wobei etwa 60 % unmittelbar deponiert und etwa 7 % thermisch behandelt und die Reststoffe deponiert werden.

Abgesehen davon, daß das jährliche Aufkommen an Klärschlamm weiter zunehmen wird, weil weitere Teile der Bevölkerung an öffentliche Kläranlagensysteme angeschlossen werden und weil der geforderte Qualitätsgrad der Abwasserreinigung steigen wird, ist keine dieser Behandlungsarten unproblematisch. Dazu kommt, daß wegen der begrenzten Kapazität und der relativen Zunahme von Schadstoffen im Klärschlamm der Landwirtschaftlich verwertbare Anteil am Gesamtaufkommen absolut und relativ zurückgehen wird.

Beim Recycling von Klärschlamm sind die Qualitätsanforderungen sehr hoch, vor allem im Hinblick auf Seuchenhygiene und chemische Inhaltsstoffe. Zur Aufbringung auf landwirtschaftlich genutzte Flächen muß Klärschlamm entseucht werden; das ist nur bei langer Einwirkzeit und/oder hoher Temperatur in einem biologischen, physikalischen oder chemischen Prozeß zu erreichen, nicht aber durch die übliche Klärschlammfaulung. Zudem hat Klärschlamm nicht nur einen relativ hohen Gehalt an giftigen Schwermetallen, sondern auch an Dioxin, so daß er nicht ohne weiteres als Landwirtschaftlicher Dünger verwertet werden kann.

Neben der mit immer größeren Problemen behafteten Deponierung mechanisch entwässerter Klärschlämme gibt es verschiedene Ansätze zur thermischen Behandlung von Klärschlamm, um die darin enthaltene organische Materie als Energieträger nutzen zu können und nur die Reststoffe deponieren zu müssen.

So ist es z.B. bekannt, Abfallstoffe, darunter auch Klärschlamm nach vorheriger Trocknung, in einer Hochtemperatur-Pyrolyse zu entgasen und das so gewonnene Pyrolysegas in einer nachgeschalteten Brennkammer zu verbrennen (EP 0 038 420 A1, DE 37 33 078 A1). Die dabei entstehenden Rauchgase können dabei als Heizgase zur Beheizung der Entgasungsanlage bzw. auch einer vorgeschalteten Trocknungsanlage verwendet werden; der Pyrolysekoks und die Asche aus der Gasverbrennung werden deponiert. Um auch die in Pyrolysekoks noch enthaltene chemisch gebundene Wärmeenergie nutzen zu können, ist es bekannt, auch diesen noch zu verbrennen (DE 28 55 510 B1). Auch hierbei werden die Verbrennungsabgase sowohl zur Beheizung der Entgasungsanlage, als auch der Trocknungsanlage eingesetzt; die verbleibende Asche wird deponiert.

Auch bei einem Verfahren der eingangs angegebenen Art wird der Klärschlamm zunächst auf einen möglichst hohen Anteil an Trockensubstanz getrocknet (EP 0 347 808 A1). Danach wird der Klärschlamm zunächst einer Niedertemperatur-Konvertierung unter anaeroben Bedingungen bei etwa 250 bis 350 Grad C unterzogen, wobei der im Klärschlamm enthaltene organische Kohlenstoff in Form von öl ausgeschieden wird. Die danach verbleibenden Rückstände werden unter Zugabe von reinem Sauerstoff bei mindestens 1.250 Grad C gebrannt. Die danach verbleibenden anorganischen Bestandteile, die nur noch etwa 10 bis 15 % des ursprünglichen Klärschlammvolumens ausmachen, können entweder als Leichtzuschläge bei der Herstellung von Beton oder in fein gemahlenem Zustand als Substitut für ein hydraulisches Bindemittel, insbesondere Portlandzement, verwendet werden.

Die Niedertemperatur-Konvertierung unter Luftabschluß ist ein Weg, die auf Erden sonst nicht direkt nachvollziehbare natürliche Erdölbildung nachzuahmen. Während in der Natur Kohle und Öl über lange Zeiträume und viele Zwischenstufen gebildet wurden, gelingt dies mit der Niedertemperatur-Konvertierung in kurzer Zeit. Es entstehen dabei aus Biopolymeren, wie Lipiden und Proteinen, Öle mit relativ hoher Verbrennungswärme; außerdem entsteht etwas Kohle. Ein weiterer wesentlicher Vorteil dieser Konvertierung besteht darin, daß bei den relativ mäßigen Temperaturen die Verflüchtigung toxischer Metalle nicht zu befürchten ist. Diese Art thermischer Behandlung grenzt sich somit von den Hochtemperatur-Pyrolysen ab, die nur zu Gasen und schwer verwertbaren Rückständen führen.

Dieses bekannte Verfahren führt nicht nur zu einer vollständigen Nutzung der im Klärschlamm enthaltenen organischen Bestandteile, auch im Hinblick auf die darin enthaltene Energie, sondern auch dazu, daß die verbleibenden anorganischen Bestandteile nicht deponiert zu werden brauchen. Es hat den weiteren Vorteil, daß die Schwermetalle während der Be handlung nicht ausgeschieden werden, sondern in der anorganischen Restmasse verbleiben, in der sie nach der Sinterung in Form von Oxiden vorliegen, also in einer ihrem natürlichen Vorkommen entsprechenden Form, so daß keine Gefahr mehr besteht, daß sie etwa durch Auswaschen wieder in den Lebenskreislauf gelangen.

Ein wesentlicher Vorteil dieses Verfahrens liegt aber auch darin, daß es durch sinnvolle Ausnutzung des hohen Energiegehaltes von Klärschlamm trotz des hohen Energiebedarfs eine weitgehend energieautarke, d.h. von der Zufuhr äußerer Energie weitgehend unabhängige Betriebsweise ermöglicht. Während dieses bekannte Verfahren gewissermaßen den theoretischen Hintergrund für ein bei weitestgehender Schonung der Umwelt praktisch vollständiges Recycling von Klärschlamm gibt, Liegt der Erfindung die Aufgabe zugrunde, eine Möglichkeit zu dessen praktischer Durchführung anzugeben.

Nach der Erfindung wird diese Aufgabe durch ein Verfahren mit den im kennzeichnenden Teil des Patentanspruches 1 angegebenen Merkmalen sowie eine Einrichtung mit den Merkmalen des Patentanspruchs 4 gelöst.

Vorteilhafte Weiterbildungen ergeben sich aus den Unteransprüchen.

Verfahrensmäßig ermöglicht die Erfindung eine kontinuierliche Behandlung von vorentwässertem Klärschlamm unter Abscheidung der Zwischenpro- 30 dukte bis hin zur Sinterung der darin enthaltenen anorganischen Bestandteile in einem vollständig geschlossenen System; insbesondere dann, wenn dieses System unter einem leichten Unterdruck gehalten wird, besteht auch keine Gefahr, daß irgendwelche die Umwelt belastenden Schadstoffe emittiert werden.

Durch die Verwendung der bei der Sinterung anfallenden Rauchgase für die Beheizung der Behandlungsstufen in der Reihenfolge des natürlicher- 40 weise eintretenden Temperaturabfalls wegen Abgabe der im Rauchgas enthaltenen Wärmemenge bis zu einer endseitigen Abgastemperatur von etwa 50 Grad C gelingt die Behandlung des Klärschlammes vom Energiebedarf her gesehen nahezu autark, d.h. die für die Behandlung erforderliche Ernergie wird weitgehend aus dem Brennwert der im Klärschlamm selbst enthaltenen organischen Bestandteile bezogen. Lediglich für die Sinterung ist die Zufuhr von reinem Sauerstoff erforderlich, wodurch unter Verbrennung der in dem Behandlungsgut nach der Konvertierungsstufe noch enthaltenen Kohle nicht nur die für die Sinterung der anorganischen Bestandteile erforderliche Temperatur erreicht, sondern auch die Verbrennung zusätzlicher, nicht regenerierbarer Energieträger vermieden wird. Dadurch wird nicht nur das Entstehen von weiterem Kohlendioxid, sondern vor allem von Stickoxiden vermieden, welche die Umwelt stark belasten.

Der Vorteil der Einrichtung wird vor allem darin gesehen, daß durch die Hintereinanderschaltung der einzelnen Behandlungsstufen eine kompakte Anlage mit kurzen Förderstrecken entsteht. die in besonders vorteilhafter Weise mit Zwangsförderern bestückt werden, so daß Störungen im Durchlauf des Behandlungsgutes vermieden werden. Von Vorteil ist weiterhin, daß die Behandlung des Klärschlammes in den einzelnen Behandlungsstufen im Durchlaufverfahren erfolgt. so daß die eigentlichen Förderstrecken innerhalb der Anlage auf ein Minimum reduziert werden können.

Die Erfindung wird nachstehend anhand der Zeichnung näher erläutert. Es zeigt
- Fig. 1: eine schematische Darstellung einer Anlage zur Behandlung von Klärschlamm,
- Fig. 2: einen Längschnitt durch eine Behandlungseinheit der Trockenstufe und
- Fig. 3: einen Querschnitt entlang der Linie III-III in Fig. 1.

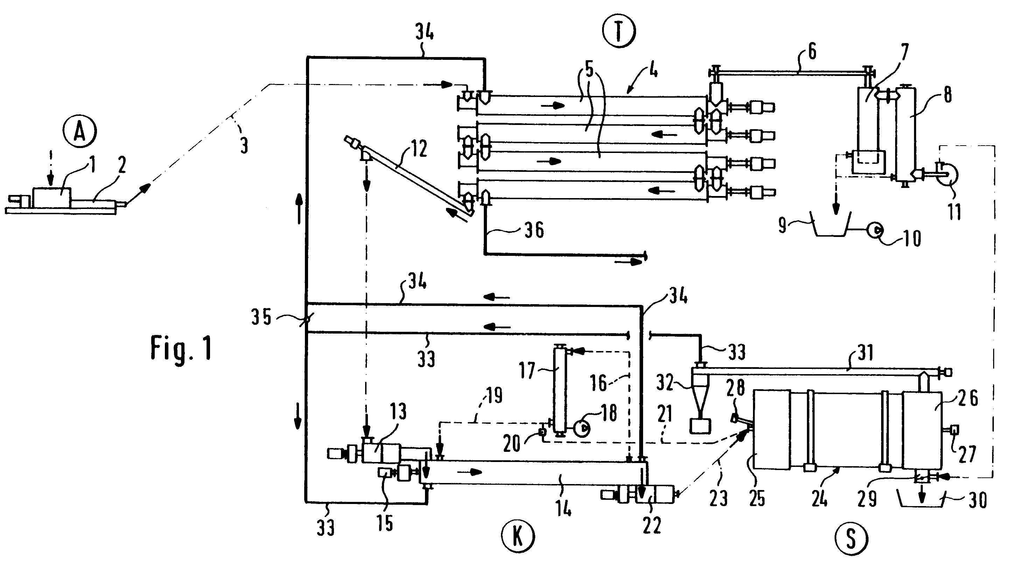

Das erfindungsgemäße Verfahren und eine Einrichtung zu dessen Durchführung kann anhand der in Fig. 1 dargestellten schematischen übersicht erläutert werden.

Die Anlage umfaßt zunächst eine Aufgabestation A mit einem Einlauftrichter 1 zur Aufgabe von mechanisch auf etwa 20 bis 30 % Trockensubstanz vorentwässertem Klärschlamm, der dann im Wege einer mechanischen Entwässerung noch weiter auf einen Feststoffgehalt von etwa 50 % entwässert werden kann.

Das mechanisch vorentwässerte Material wird mittels einer Feststoffpumpe 2 über eine nur schematisch angedeutete Förderleitung 3 in Pfeilrichtung einer Trockenstufe T zugeführt, in der das Material wiederum in Pfeilrichtung mehrere, einander in einer Trockenbatterie 4 nachgeschaltete, beheizbare Trockeneinheiten 5 durchläuft; die Trokkeneinheiten 5 werden weiter unten noch näher erläutert. Aus der Trockenstufe T werden über eine Leitung 6 die Brüden abgezogen und einem Brüdenwäscher 7 sowie einem Kondensator 8 zugeführt. Aus dem Kondensator 8 gelangt das Kondensat in einen Auffangbehälter 9, aus dem es durch eine Kondensatpumpe 10 abgezogen werden kann. Ein an den Kondensator 8 angeschlossenes Gebläse 11 saugt die Gase ab und erzeugt gleichzeitig einen Unterdruck im gesamten System.

Das Behandlungsgut, das die Trockenstufe T durchlaufen hat, gelangt dann über einen Zwischenförderer 12, der zweckmäßigerweise als zwangsweise fördernde Doppelschnecke ausgebildet ist, zur Konvertierungsstufe K. In die Konvertierungsstufe K gelangt das Material über einen Eintrag 13, der ebenfalls eine zwangsweise fördernde Doppelschnecke aufweist, durch die das Behandlungsgut in Pfeilrichtung in den eigentlichen Konverter 14 transportiert wird.

In dem Konverter 14, den das Behandlungsgut mittels einer durch einen Antrieb 15 angetriebenen Fördereinrichtung, vorzugsweise wieder einer zwangsweise fördernden Doppelschnecke, durchläuft, wird das Behandlungsgut auf eine Temperatur von etwa 250 bis 350 Grad C aufgeheizt. Da im Konverter anaerobe Bedingungen aufrechterhalten werden müssen, muß die Fördereinrichtung an den Enden abgedichtet sein. Bei dieser sogenannten Niedertemperatur-Konvertierung unter anaeroben Bedingungen entstehen analog der Bildung von Erdöl und Kohle in der Natur aus den im Klärschlamm enthaltenen Lipiden und Proteinen Öle mit einem verhältnismäßig hohen Kohlenstoffanteil und hoher Verbrennungswärme, daneben Kohle.

Die Konversionsgase werden aus dem Konverter 14 über eine Leitung 16 abgeschieden und einem Kondensator 17 zugeführt. Das bei der Kondensation entstehende Öl kann über eine Ölpumpe 18 abgezogen werden; die Restgase werden über eine Leitung 19 wieder in den Konverter 14 zurückgeführt. Ein etwa entstehender überdruck kann über ein überdruckventil 20 und eine Leitung 21 unmittelbar in die nachgeschaltete Sinterstufe S übergeführt werden.

Das in der Konvertierungsstufe K von den flüchtigen organischen Bestandteilen befreite Material gelangt dann über einen Austrag 22 und gegebenenfalls einen weiteren Zwischenförderer 23 zur Sinterstufe S. Die Sinterstufe S umfaßt einen Drehrohrofen 24 üblicher Bauart, in den auf der Eingangsseite 25 die Rückstände der Niedertemperatur-Konvertierung eingetragen werden. Der Drehrohrofen 24 ist an der Ausgangsseite 26 mit einem Gas-Sauerstoff-Brenner 27 ausgestattet; eingangsseitig ist über eine Lanze 28 reiner Sauerstoff zuführbar. Unter Zuführung von reinem Sauerstoff verbrennt die in dem Material noch enthaltene Restkohle bei einer Temperatur von 1.250 bis etwa 1.400 Grad C, wodurch eine Sinterung der dann allein noch vorhandenen anorganischen Bestandteile des Materials eintritt. Das gesinterte Endprodukt gelangt über einen Austrag 29 in einen Behälter 30, aus dem es abgezogen werden kann.

Parallel zu dem vorbeschriebenen Weg des Behandlungsgutes ist der Weg des bei der Sinterung im Drehrohrofen 24 entstehenden Rauchgases. Das Rauchgas wird aus dem Ofen 24 über eine Leitung 31 abgezogen und über einen Zyklon 32 zur Staubabscheidung und eine Leitung 33 zunächst in den Konverter 14 geführt. Das Rauchgas tritt an derselben Seite wie das Behandlungsgut mit einer Temperatur von etwa 400 Grad C in den Konverter 14 ein, umstreicht eine in seinem Inneren angeordnete Behandlungseinheit und verläßt den Konverter 14 wieder über eine Leitung 34 mit einer Temperatur von etwa 250 Grad C. Die Heizgasführung im Konverter 14 erfolgt in gleicher Weise wie bei den Trockeneinheiten 5, die weiter unten noch beschrieben werden.

Über die Leitung 34, die mit der Leitung 33 gegebenenfalls durch eine Bypassklappe 35 verbunden werden kann, gelangt das Rauchgas dann in die erste der Trockeneinheiten 5 der Trockenstufe T, die es in einer weiter unten noch zu erläuternden Weise durchströmt. In jeder der Trockeneinheiten 5 verringert sich die Rauchgastemperatur größenordnungsmäßig um 50 Grad C, so daß es am Ende beim Verlassen der Trockenstufe T noch eine Temperatur von etwa 50 Grad C hat. Über eine Abgasleitung 36 wird das Abgas dann einer üblichen Abgasreinigung zugeführt.

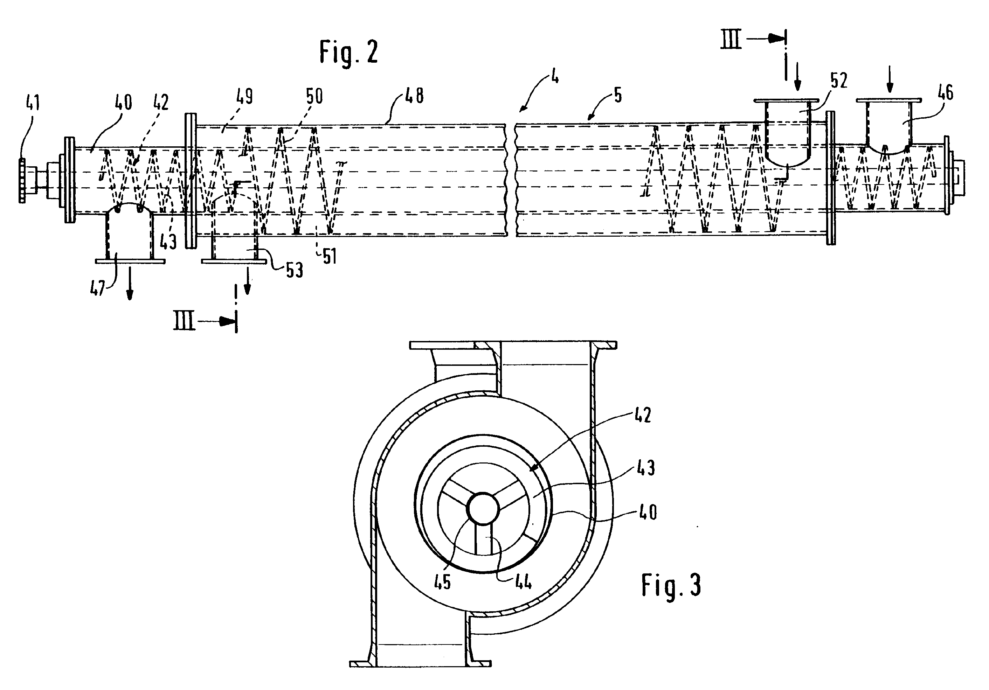

Eine Trockeneinheit 5 der Trockenstufe T ist in den Fig. 2 und 3 im Längs- bzw. Querschnitt in größerem Maßstab dargestellt. Die Trockeneinheit 5 besteht zunächst aus einem Innenrohr 40, in dem durch einen Antrieb 41, z.B. einen Elektromotor, angetrieben eine Förderschnecke 42 umläuft. Die Förderschnecke 42 besteht aus einer äußeren ringförmigen Wendel 43 (Fig. 3), die über radiale Stege 44 an einer Welle 45 befestigt ist, die hier als Hohlwelle dargestellt.ist. Die Ausbildung der Wendel 43 als Hohlwendel hat den Vorteil, daß das Material in dem in dem Innenrohr 40 gebildeten Hohlraum frei fallen und transportiert werden kann. Das Behandlungsgut wird dem Innenrohr 40 an der einen Seite über einen Rohrstutzen 46 in freiem Fall zugeführt und am anderen Ende über einen Rohrstutzen 47 abgezogen, um die nächste Trokkeneinheit zu durchlaufen.

Über den größten Teil seiner Länge ist das Innenrohr 40 von einem äußeren Mantelrohr 48 umgeben. In dem Ringraum 49 zwischen dem Innenrohr 40 und dem äußeren Mantelrohr 48 befindet sich eine ringförmige Wendel 50, durch die in dem Ringraum 49 ein wendelförmiger Ringkanal 51 gebildet wird. In diesen Ringkanal 51 wird - parallel zu der Förderrichtung des Behandlungsgutes - das Rauchgas aus dem Drehrohrofen 24 als Heizgas eingeleitet. Dies geschieht über einen Rohrstutzen 52 als Einleitung und einen Rohrstutzen 53 als Ausleitung.

Gas als Wärmeträger hat den besten Wirkungsgrad, wenn es mit hoher Geschwindigkeit auf die Wärmeübergangsfläche auftrifft. Wenn das hier als Heizgas verwendete Rauchgas durch diesen wendelförmigen Ringkanal 52 gepreßt wird, erhöht sich wegen des geringen Querschnitts seine Geschwindigkeit, wodurch der Wärmeübergang verbessert wird.

Außerdem ergibt sich durch die wendelförmige Führung des Heizgaskanals eine wesentlich längere wirksame Behandlungsstrecke, die z.B. bei einer Rohrlänge von ca. 6 m eine Verlängerung von ca. 80 m ausmacht; dadurch wird der Wärmeinhalt des Rauchgases besonders gut genutzt.

Es ist selbstverständlich, daß nicht nur die Einheiten in den einzelnen Behandlungsstufen, sondern auch die Förderleitungen für das Rauchgas wärmegedämmt werden, um einerseits eine Wärmeabgabe an die Umwelt zu vermeiden und andererseits den Wärmeinhalt des Rauchgases möglichst vollständig als Prozeßwärme nutzen zu können.

## Patentansprüche

1. Verfahren zur Behandlung von Klärschlamm, bei dem der Klärschlamm in aufeinanderfolgenden Behandlungsstufen zunächst getrocknet, danach einer Konvertierung unter anaeroben Bedingungen bei ca. 250 bis 350 Grad C unterzogen und schließlich bei mindestens 1.250 Grad C gebrannt wird, dadurch gekennzeichnet,
daß alle Verfahrensschritte einschließlich der Forderung des Behandlungsgutes zwischen den einzelnen Behandlungsstufen in kontinuierlichem Durchlauf nacheinander in einem geschlossenen System durchgeführt werden, aus dem lediglich in der Trockenstufe (T) die Brüden und in der Konvertierungsstufe (K) das Konversionsgas abgeführt und kondensiert werden,
daß das beim Brennen anfallende Rauchgas in kontinuierlichem Strom zum Beheizen zunächst der Einrichtungen zum Konvertieren und danach der Einrichtungen zum Trocknen verwendet wird,
wobei der Rauchgasstrom innerhalb der jeweiligen Einrichtungen parallel zur Förderrichtung des Behandlungsgutes geführt wird, so daß jeweils am Beginn der jeweiligen Behandlungsstufe die höchste Rauchgastemperatur zur Beheizung zur Verfügung steht.

2. Verfahren nach Anspruch 1 dadurch gekennzeichnet, daß in dem gesamten Behandlungs- und Fördersystem ein leichter Unterdruck aufrechterhalten wird.

3. Verfahren nach Anspruch 1 oder 2, dadurch gekennzeichnet, daß das Behandlungsgut auf den Förderstrecken zwischen den einzelnen Behandlungsstufen zwangsweise gefördert wird, z.B. mittels Schneckenförderer.

4. Einrichtung zum Durchführen des Verfahrens gemäß Anspruch 1, gekennzeichnet durch folgende Vorrichtungsmerkmale:
- eine Aufgabestation (A) zur Aufgabe von mechanisch vorentwässertem Klärschlamm,
- eine Trockenstufe (T) mit mindestens einer durch Heizgas beheizbaren rohrförmigen Behandlungseinheit und mit Vorrichtungen zur kontinuierlichen Forderung des Behandlungsgutes,
- eine Konvertierungsstufe (K) mit mindestens einer durch Heizgas beheizbaren rohrförmigen Behandlungseinheit und mit Vorrichtungen zur kontinuierlichen Förderung des Behandlungsgutes,
- eine Sinterstufe (S) mit einem Drehrohrofen mit einem Austrag für die Schlacke,
- geschlossene Leitungen zur kontinuierlichen Forderung des Behandlungsgutes zwischen der Aufgabestation (A), den Behandlungseinheiten der Trockenstufe (T) und der Konvertierungsstufe (K) sowie dem Drehrohrofen der Sinterstufe (S),
- Leitungen zur Forderung des in der Sinterstufe (S) anfallenden Rauchgases als Heizgas zunächst zu den Behandlungseinheiten der Konvertierungsstufe (K) und danach zu denjenigen der Trockenstufe (T) sowie
- eine Leitung (6) zur Abführung der Brüden aus der Trockenstufe (T) zu einem Kondensator (8) und eine Leitung (16) zur Abführung des Konversionsgases aus der Konvertierungsstufe (K) zu einem Kondensator (17).

5. Einrichtung nach Anspruch 4, dadurch gekennzeichnet, daß der Trockenstufe (T) eine Vorrichtung zur mechanischen Entwässerung des Klärschlammes vorgeschaltet ist.

6. Einrichtung nach Anspruch 4 oder 5, dadurch gekennzeichnet, daß zur Förderung des Behandlungsgutes zwischen den Behandlungsstufen Zwangsförderer, z.B. Doppelschneckenförderer, vorgesehen sind.

7. Einrichtung nach einem der Ansprüche 4 bis 6, dadurch gekennzeichnet, daß in der Trockenstufe (T) mehrere Behandlungseinheiten (5) hintereinander angeordnet und zur Förderung des Behandlungsgutes jeweils an den Enden miteinander verbunden sind.

8. Einrichtung nach einem der Ansprüche 4 bis 7, dadurch gekennzeichnet, daß die Behandlungseinheiten (5) mit jeweils umgekehrter Förderrichtung übereinander zu einer Trockenbatterie (4) zusammengefaßt sind.

9. Einrichtung nach einem der Ansprüche 4 bis 8, dadurch gekennzeichnet, daß jede Behandlungseinheit (5) der Trockenstufe (T) aus einem inneren Förderrohr (40) für das Behandlungsgut besteht, in dem eine Förderschnecke (42) drehbar angeordnet ist und daß das Förderrohr (40) von einem äußeren Mantelrohr (48) umgeben ist, wobei der zwischen dem Förderrohr (40) und dem Mantelrohr (48) gebildete ringförmige Hohlraum (49) durch Heizgas beaufschlagbar ist.

10. Einrichtung nach Anspruch 9, dadurch gekennzeichnet, daß in dem ringförmigen Hohlraum (49) durch eine diesen in Querrichtung abschließende ringförmige Wendel (50) ein wendelförmiger Heizkanal (51) gebildet ist.

11. Einrichtung nach einem der Ansprüche 4 bis 10, dadurch gekennzeichnet, daß die Förderschnecke (42) aus einer ringförmigen Wendel (43) besteht, die durch radiale Stege (44) an einer zentral angetriebenen Achse (45) befestigt ist.

12. Einrichtung nach einem der Ansprüche 4 bis 11, dadurch gekennzeichnet, daß am Außenumfang des Mantelrohres (48) eine wärmedämmende Ummantelung angeordnet ist.

## Claims

1. Process for the treatment of sewage sludge, in which the sewage sludge is firstly dried in successive treatment stages, is then converted in anaerobic conditions at approximately 250 to 350 degrees C and is finally burnt at a temperature of at least 1,250 degrees C, characterised in that all the process steps, including the conveyance of the product to be treated between the individual treatment stages, are carried out successively in a continuous operation in a closed system, from which only the vapours are removed and condensed in the drying stage (T) and the conversion gas in the conversion stage (K), that the flue gas resulting during burning is used in a continuous flow for heating firstly the apparatus for converting and then the apparatus for drying, the flue gas flow being guided inside the respective apparatus parallel to the direction in which the product to be treated is conveyed, so that the temperature of the flue gas is always at a maximum for heating at the beginning of the respective treatment stage.

2. Process according to claim 1, characterised in that a slight underpressure is maintained in the entire treatment and conveying system.

3. Process according to claim 1 or 2, characterised in that the product to be treated is conveyed positively, e.g. by means of screw conveyors, along the conveying routes between the individual treatment stages.

4. Apparatus for carrying out the process according to claim 1, characterised by the following device features:
- a delivery station (A) for delivering sewage sludge which has been subjected to a preliminary mechanical dewatering treatment,
- a drying stage (T) with at least one tubular treatment unit which can be heated by heating gas and with devices for continuously conveying the product to be treated,
- a conversion stage (K) with at least one tubular treatment unit which can be heated by heating gas and with devices for continuously conveying the product to be treated,
- a sintering stage (S) with a rotary tube furnace having a discharge point for the slag,
- closed conduits for continuously conveying the product to be treated between the delivery station (A), the treatment units of the drying stage (T), the conversion stage (K) and the rotary tube furnace of the sintering stage (S),
- conduits for conveying the flue gas resulting in the sintering stage (S) as a heating gas firstly to the treatment units of the conversion stage (K) and then to those of the drying stage (T), and
- a conduit (6) for removing the vapours from the drying stage (T) to a condenser (8) and a conduit (16) for removing the conversion gas from the conversion stage (K) to a condenser (17).

5. Apparatus according to claim 4, characterised in that a device for the mechanical dewatering of the sewage sludge is disposed upstream of the drying stage (T).

6. Apparatus according to claim 4 or 5, characterised in that positive conveyors, e.g. twin-screw conveyors, are provided to convey the product to be treated between the treatment stages.

7. Apparatus according to one of claims 4 to 6, characterised in that a plurality of treatment units (5) are arranged in series in the drying stage (T) and in each case connected to one another at the ends to convey the product to be treated.

8. Apparatus according to one of claims 4 to 7, characterised in that the treatment units (5) are assembled one above the other to form a drying battery (4) with opposite conveying directions in each case.

9. Apparatus according to one of claims 4 to 8, characterised in that each treatment unit (5) of the drying stage (T) consists of an inner tube conveyor (40) for the product to be treated, in which conveyor a screw conveyor (42) is rotatably arranged, and that the tube conveyor (40) is surrounded by an outer casing tube (48), and heating gas can be admitted to the annular cavity (49) formed between the tube conveyor (40) and the casing tube (48).

10. Apparatus according to claim 9, characterised in that a helical heating channel (51) is formed in the annular cavity (49) by an annular helix (50), which closes the cavity in the transverse direction.

11. Apparatus according to one of claims 4 to 10, characterised in that the screw conveyor (42) consists of an annular helix (43), which is secured via radial webs (44) to a centrally driven shaft (45).

12. Apparatus according to one of claims 4 to 11, characterised in that a heat-insulating envelope is arranged at the outer circumference of the casing tube (48).

## Revendications

1. Procédé de traitement de boues d'épuration, dans lequel les boues d'épuration sont d'abord séchées en des étapes de traitement successives, puis soumises à une conversion dans des conditions anaérobiques, à une température d'à peu près 250° à 350° C, et enfin calcinées à une température d'au moins 1250° C, caractérisé en ce que toutes les étapes de procédé, y compris le transport du produit de traitement entre les différentes étapes de traitement, sont effectuées les unes après les autres avec une circulation continue, dans un système fermé, d'où seules les buées sont séparées dans l'étape sèche (T) et les gaz de conversion sont évacués dans l'étape de conversion (K), puis condensés, en ce que les gaz de fumées apparaissant lors de la calcination sont utilisés, en un courant continu, pour chauffer d'abord les dispositifs de conversion, puis les dispositifs de séchage, le courant de gaz de fumées étant guidé à l'intérieur des différents dispositifs parallèlement à la direction de transport du produit de traitement, de manière qu'on dispose chaque fois au début de l'étape de traitement spécifique de la température de gaz de fumées maximale pour opérer le chauffage.

2. Procédé selon la revendication 1, caractérisé en ce qu'une légère dépression est entretenue dans l'ensemble du système de traitement et de transport.

3. Procédé selon la revendication 1 ou 2, caractérisé en ce que le produit de traitement est véhiculé de façon forcée sur les trajets de transport entre les différents étages de traitement, par exemple au moyen de transporteurs à vis.

4. Dispositif de mise en oeuvre du procédé selon la revendication 1, caractérisé par les caractéristiques de dispositif suivantes :
- un poste d'alimentation (A), pour charger des boues d'épuration ayant été préséchées mécaniquement,
- un étage sécheur (T), avec au moins une unité de traitement tubulaire, susceptible d'être chauffée par des gaz chauds, et avec des dispositifs destinés à assurer le transport continu du produit de traitement,
- un étage convertisseur (K), avec au moins une unité de traitement tubulaire, susceptible d'être chauffée par des gaz chauds, et avec des dispositifs de transport continu du produit de traitement,
- un étage fritteur (S), avec un four tubulaire rotatif équipé d'une évacuation pour les scories,
- des conduites fermées, pour le transport continu du produit de traitement entre le poste d'alimentation (A), les unités de traitement de l'étage sécheur (T) et l'étage convertisseur (K), ainsi que le four tubulaire rotatif de l'étage fritteur (S),
- des conduites, pour le transport des gaz de fumées, produits dans l'étage fritteur (S), à titre de gaz de chauffage, d'abord aux unités de traitement de l'étage convertisseur (K) et ensuite à celles de l'étage sécheur (T), ainsi qu'
- une conduite (6), pour l'évacuation des buées hors de l'étage sécheur (T), vers un condenseur (8) et une conduite (16) pour l'évacuation des gaz de conversion hors de l'étage convertisseur (K), à un condenseur (17).

5. Dispositif selon la revendication 4, caractérisé en ce qu'un dispositif de séchage mécanique des boues d'épuration est mis en circuit en amont de l'étage sécheur (T).

6. Dispositif selon la revendication 4 ou 5, caractérisé en ce que des transporteurs à action forcée, par exemple des transporteurs à vis double, sont prévus pour assurer le transport du produit de traitement entre les étages de traitement.

7. Dispositif selon l'une des revendications 4 à 6, caractérisé en ce que plusieurs unités de traitement (5) sont disposées les unes derrière les autres dans l'étage sécheur (T), et reliées chacune ensemble à leurs extrémités respectives en vue du transport du produit de traitement.

8. Dispositif selon l'une des revendications 4 à 7, caractérisé en ce que les unités de traitement (5) sont groupées avec chaque fois une direction de transport inversée, les unes au-dessus des autres, pour constituer une batterie de séchage (4).

9. Dispositif selon l'une des revendications 4 à 8, caractérisé en ce que chaque unité de traitement (5) de l'étage sécheur (T) est composée d'un tube transporteur intérieur (40) pour le produit de traitement, dans lequel est disposé une vis de transport (42) susceptible de tourner et en ce que le tube transporteur (40) est entouré par un tube enveloppe extérieur (48), l'espace creux annulaire (49) formé entre le tube transporteur (40) et le tube enveloppe (48) pouvant être exposé aux gaz chauds.

10. Dispositif selon la revendication 9, caractérisé en ce qu'un canal de chauffage (51) hélicoïdal est formé dans l'espace creux annulaire (49), au moyen d'une hélice (50) annulaire constituant une délimitation en direction transversale.

11. Dispositif selon l'une des revendications 4 à 10, caractérisé en ce que la vis de transport (42) est composée d'une hélice annulaire (43), fixée sur un axe (45) à entraînement central, au moyen de nervures radiales (44).

12. Dispositif selon l'une des revendications 4 à 11, caractérisé en ce qu'une enveloppe d'isolation thermique est disposée sur la périphérie extérieure du tube enveloppe (48).
